# EUROPEAN PATENT SPECIFICATION

(11) **EP 4 121 188 B1**
(45) Date of publication and mention of the grant of the patent: **11.11.2026**
(21) Application number: 20925851.6
(22) Date of filing: 17.03.2020
(51) Int. Cl.: B01D 25/30, B01D 25/12, B01D 25/21, B01D 25/164

(54) **AN OUTLET COVER FOR A RECESSED PLATE -TYPE FILTER, A FILTER PLATE ASSEMBLY AND A RECESSED PLATE -TYPE FILTER**
AUSLASSABDECKUNG FÜR EIN FILTER VOM VERTIEFTEN PLATTENTYP, FILTERPLATTENANORDNUNG UND FILTER VOM VERTIEFTEN PLATTENTYP
COUVERCLE DE SORTIE POUR UN FILTRE DE TYPE À PLAQUE ÉVIDÉE, ENSEMBLE PLAQUE FILTRANTE ET FILTRE DE TYPE À PLAQUE ÉVIDÉE

(43) Date of publication of application: 25.01.2023
(73) Proprietor: Metso Finland Oy, 02230 Espoo (FI)
(72) Inventor: SUUTARI, Teppo, 54770 Heituinlahti (FI)
(74) Representative: Boco IP Oy Ab
(86) International application number: PCT/FI2020/050166
(87) International publication number: WO 2021/186098

(56) References cited:
- DE-B- 1 102 704
- GB-A- 907 503
- JP-A- H05 103 914
- US-A- 4 666 596
- US-A- 5 045 191
- US-A- 5 045 191
- US-A1- 2010 163 476
- US-A1- 2010 163 476
- US-A1- 2013 043 175

## Description

### FIELD OF THE DISCLOSURE

The present disclosure relates to recessed plate -type filters, such as filter presses and tower presses. More particularly, the present disclosure relates to an outlet cover a filter plate, and a filter plate assembly for such a filter. The present disclosure further concerns such a recessed plate -type filter itself.

### BACKGROUND OF THE DISCLOSURE

Outlet covers are used in recessed plate -type filters to cover and protect outlet openings and prevent them from being blocked such that filtrate can freely flow out from the filter chamber. Particularly, the outlet covers are used to prevent the filter cake from pushing the filter cloth into the outlet opening. Conventionally, outlet covers are attached to an associated filter plate either directly or via a diaphragm.

Furthermore, outlet covers are simultaneously used to protect the filter cloth from a drying air flow used to dry the filter cake by preventing the drying air flow from being blown directly towards the filter cloth.

For example, the outlet cover may have been provided with a protrusion that is snapped into a groove formed on a diaphragm to frictionally engage therewith. However, this requires a corresponding form to be provided on an associated filter plate for accommodating such a groove on the diaphragm and the protrusion on the outlet cover. It has been discovered, that providing such forms on the filter plates results in excessive internal stresses being exhibited on critical areas of the filter plate, thus resulting in insufficient longevity of the filter plate.

Alternatively, the outlet covers may conventionally have been attached to the filter plate using self-tapping screws which engage a non-threaded pilot hole on the associated filter plate. However, such threads have been found to be stripped under repetitive compression (i.e., when filter plates are pressed together for closing the filter chamber during the filtration cycle). That is, during operation of the filter, a considerable axial force is exerted on the screws, thereby stripping the threads on the plates, often made of a weaker material.

A further conventional way of attaching the outlet cover to the filter plate has been using separate threaded inserts, which are attached to the filter plate and can be replaced separately of the filter plate. Also, through bolts and nuts have also been used for attaching an outlet cover to a filter plate.

All of the known prior art solutions for attaching the outlet cover to the filter plate discussed above share a problem related to repetitive compression cycles during operation exerting considerable axial loads on the outlet cover, thereby causing threads to strip, inserts to shear and become detached or other such issues causing poor longevity of the attachment between the outlet cover and the filter plate.

U.S. patent publication 5,045,191 discloses a filtrate outlet stopper, in which pins are used to engage with an outlet of a filter plate. Publication US 2010/163476 A1 discloses a filter device with a deviation element without pins. Publication GB 907503 A discloses a filter plate equipped with a detachable cover plate-

### BRIEF DESCRIPTION OF THE DISCLOSURE

An object of the present disclosure is to achieve an outlet cover, a filter plate assembly, and a filter providing increased longevity thereof.

The object of the disclosure is achieved by an outlet cover, a filter plate assembly, and a filter which are characterized by what is stated in the independent claims. The preferred embodiments of the disclosure are disclosed in the dependent claims.

The disclosure is based on the idea of providing the outlet cover with a first attachment pin which is fixed with respect to the outlet cover and has a radially extendable portion, which can radially deform away from the remaining first attachment pin by a radial force exerted on the extendable portion from a hollow inside of the first attachment pin.

In this way, the radially extendable portion provides for an engagement between the first attachment pin and an associated filter plate sufficiently strong to which prevent the first attachment pin from being withdrawn from an associated attachment hole, while allowing the first attachment pin to be compressed further into the associated attachment hole (i.e. when filter plates are pressed against each other during a filtration cycle), thereby preventing a securing element from stripping any retaining surface, and thus increasing the longevity of the outlet cover.

### BRIEF DESCRIPTION OF THE DRAWINGS

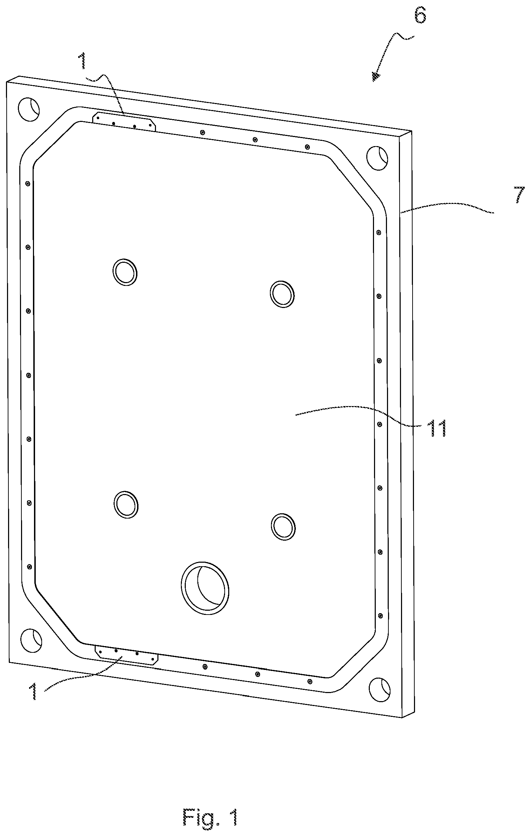

In the following the disclosure will be described in greater detail by means of preferred embodiments with reference to the accompanying drawings, in which
Figure 1 schematically illustrates a perspective view of a filter plate assembly according to an embodiment of the present disclosure, as shown as a perspective view;

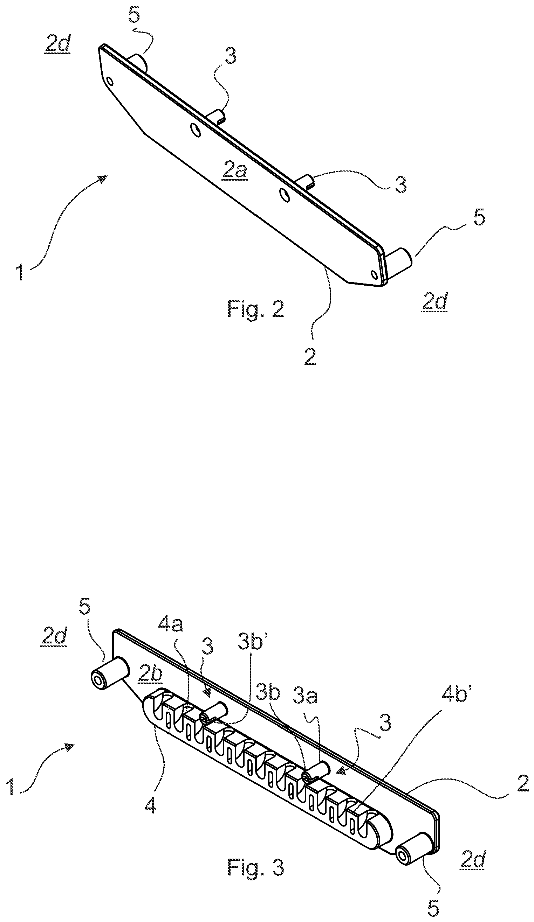

Figure 2 schematically illustrates a perspective view of an outlet cover according to an embodiment of the present disclosure, as seen from an outer side thereof;; Figure 3 schematically illustrates a perspective view of the outlet cover of Fig. 2, as seen from the attachment side thereof;

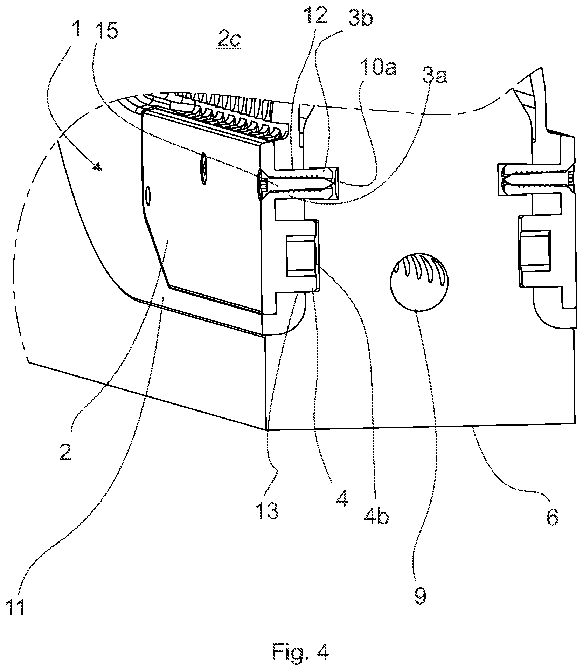

Figure 4 schematically illustrates a partially cut view of the filter plate assembly of Fig. 1, showing a cut section along a first attachment pin;

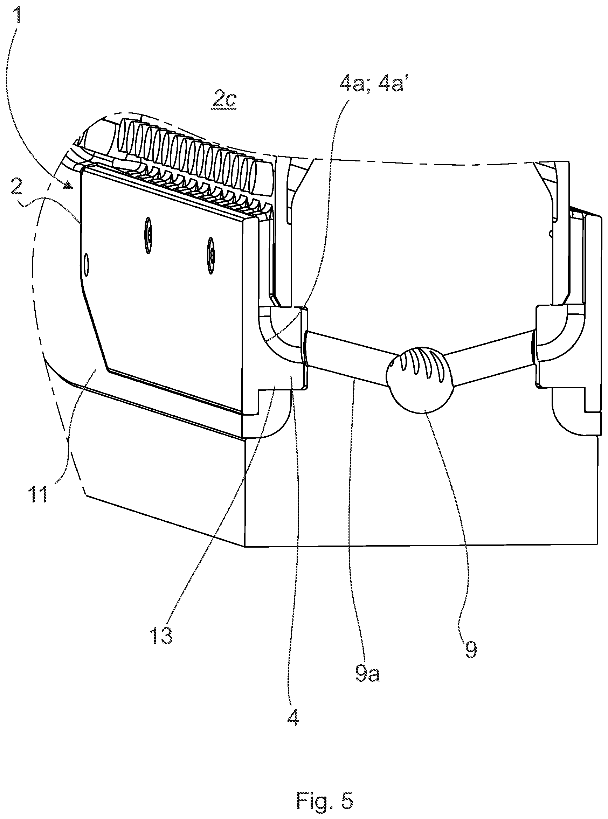

Figure 5 schematically illustrates a partially cut view of the filter plate assembly of Fig. 1, showing a cut section along a duct of a flow deflector, and

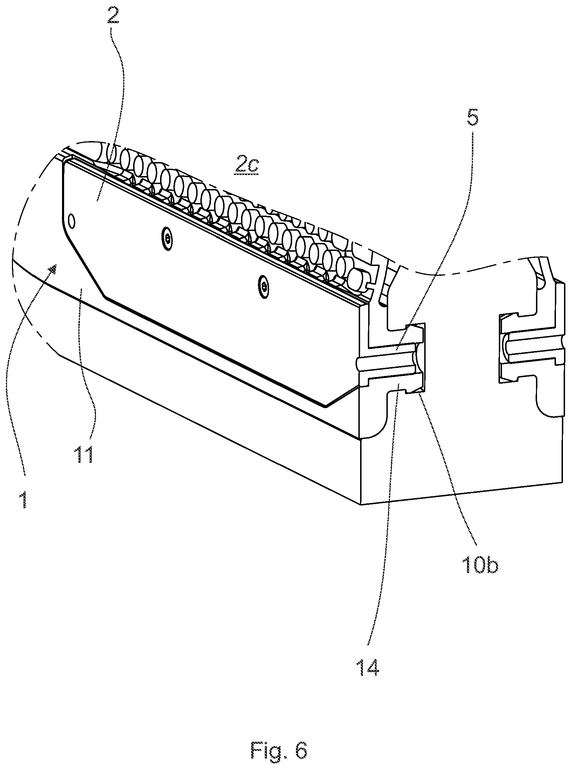

Figure 6 schematically illustrates a partially cut view of the filter plate assembly of Fig. 1, showing a cut section along a second attachment pin.

### DETAILED DESCRIPTION OF THE DISCLOSURE

According to a first aspect of the present disclosure, an outlet cover 1 for a recessed plate -type filter, such as a filter press or a tower press, is provided. Most suitably, the outlet cover is suitable for a recessed plate -type filter equipped with a diaphragm for squeezing a filter cake formed in a filter chamber.

The outlet cover 1 comprises a planar base 2 having a generally flat side, defining an outer side 2a of the outlet cover. The planar base 2 has also an opposite side, defining an attachment side 2b of the outlet cover 1, which is to be attached against a diaphragm filter plate assembly.

The outlet cover 1 further comprises one or more a first attachment pins 3 protruding perpendicularly for a distance from the attachment side 2b of the base 2. The first attachment pin 3 does not need to be perpendicular with respect to the base 2, but it should extend perpendicularly therefrom.

The outlet cover 1 further comprises a flow deflector 4 protruding perpendicularly for a distance from the attachment side 2b of the base 2. The flow deflector 4 does not need to be perpendicular with respect to the base 4, but it should extend perpendicularly therefrom. The flow deflector 4 comprises at least a conduit 4a for deflecting a flow from a transverse chamber side 2c perpendicularly towards the attachment side 2b, and vice versa. In practice, the conduit 4a is arranged to be suitable for conducting a flow from a filter chamber into a collector channel 9a of a filter plate 6, and vice versa. In the connection of this disclosure, the chamber side 2c is defined as side of the outlet cover 1 transverse to both the outer side 2a and the attachment side 2b thereof and residing between the two.

Particularly, the first attachment pin 3 has a hollow shell 3a, the inside of which opens at least towards the outer side, through the base 2.

At least a radially extendable portion 3b is provided on the first attachment pin 3, so as to allow the extendable portion 3b to radially deform away from the remaining shell 3a by a radial force exerted on the extendable portion from the hollow inside of the first attachment pin 3. Moreover, the one or more first attachment pins 3 are fixed parts of the base 2.

Preferably, but not necessarily, the one or more attachment pins 3 are integral parts of the base 2.

More preferably, but not necessarily, the outlet cover 1 is formed a single integral piece.

**In** an embodiment according to the first aspect of the present disclosure, the radially extendable portion 3b of the first attachment pin 3 is provided at a distal portion of the first attachment protrusion.

This, contributes towards achieving a limited clearance between the outlet cover 1 and an associated filter plate 6 under compression by allowing a form-fitted coupling in a direction of removal to be formed between the first attachment pin 3 and an associated first attachment hole 10a having a diameter increasing towards the bottom thereof. This, in turn, further increases the longevity of the of the outlet cover 1 itself

**In** the context of the present disclosure, the distal portion of the first attachment pin 3 is used to describe a portion of the attachment pin 3 extending for no more than ½ of the length thereof from the distal end of the attachment pin towards the base 2. Preferably, but not necessarily, the distal portion may be defined as a portion of the attachment pin 3 extending for no more than 1/3 of the length thereof from the distal end of the attachment pin towards the base 2. More preferably, but not necessarily, the distal portion may be defined as a portion of the attachment pin 3 extending for no more than 1/4 of the length thereof from the distal end of the attachment pin towards the base 2.

**In** an embodiment according to the first aspect of the present disclosure, the inside of the hollow shell 3a additionally opens towards the attachment side 2b. In other words, the distal end of the hollow inside of the first attachment piece 3 is open. Consequently, the extendable characteristic of the first attachment pin 3 is increasingly exhibited at the distal end of the first attachment pin 3.

**In** an embodiment according to the first aspect of the present disclosure, the expandable portion 3b is formed partially separated from the remaining shell 3a of the first attachment pin 3. This allows the extendable portion 3b to radially deflect away from the remaining shell 3a by a radial force exerted on the extendable portion from the hollow inside of the first attachment pin 3.

This provides the advantage, that the first attachment pin 3, and preferably the whole outlet cover 1, can be manufactured from a more rigid material while still enabling the extendable characteristics thereof, as compared to an attachment pin in which the extendable portion is not partially separated from the remaining shell.

Preferably, but not necessarily, the radially extendable portion 3b of the first attachment pin 3 is partially separated from the remaining shell 3a by at least one cut-out 3b' extending radially along the shell 3a and axially along the first attachment pin 3. More preferably, but not necessarily, the at least one cut out 3b' extends through the shell 3a.

More preferably, but not necessarily, such at least one cut-out 3b' extends from a distal end of the first attachment pin 3 towards the planar base 3. This provides a structure of the extendable portion 3b, in which the radial extendibility is exhibited mostly at the distal end of the first attachment pin 3. Furthermore, such a structure is considered particularly advantageous in connection with an associated first attachment hole 10a of a filter plate 6, having an inner diameter increasing towards the bottom of the said hole 10a, as a secure attachment allowing a mutual clearance may be achieved.

In an embodiment according to the first aspect of the present disclosure, the first attachment pin 3 has an inner diameter decreasing towards the distal end thereof. Also, this provides a structure of the extendable portion 3b, in which the radial extendibility is exhibited mostly at the distal end of the first attachment pin 3. Furthermore, such a structure is considered particularly advantageous in connection with an associated first attachment hole 10a of a filter plate 6, having an inner diameter increasing towards the bottom of the said hole 10a, as a secure attachment allowing a mutual clearance may be achieved.

In an embodiment according to the first aspect of the present disclosure, the base 2 of the outlet cover 1 extends from the flow deflector 4 for a distance towards the chamber side 2c.

This further prevents a filter cake formed within a filter chamber from pushing a filter cloth over a conduit 4a, thereby blocking it. Furthermore, such an extended base 2 further directs a drying flow directed into the filter chamber so as to be more aligned with the filter cloth as it contacts the filter cloth, thereby reducing the abrasive effect on the filter cloth.

In an embodiment according to the first aspect of the present disclosure, the one or more first attachment pins 3 are arranged aligned with the flow deflector 4, on the chamber side 2c with respect thereto.

When an outlet cover 1 is provided on a lower edge of an filter plate 6, a gravitationally discharged filter cake may cling to or hit the outlet cover during discharge. This, in turn, may bend or otherwise damage the outlet cover, particularly because the flow deflector 4 forms a relatively large unattached (to the filter plate) portion of the outlet cover. Arranging the one or more first attachment pins 3 accordingly is advantageous, as increased support is achieved to an area which is most susceptible to deformation or damage caused by filter cake being discharged.

Moreover, if the outlet cover 1 is associated with a filter plate assembly equipped with a filter diaphragm 11, inherently equipped with a flow opening 13 for receiving the flow deflector 4 therethrough, arranging the first attachment pins 3 accordingly provides increased support and secures the diaphragm 11 around the flow opening 13, thereby preventing solids build-up between the diaphragm and the filter plate 6, and/or between the diaphragm 11 and the outlet cover 1.

Preferably, but not necessarily, the one or more first attachment pins are provided unaligned with the conduits 4a of the flow deflector 4, such that flow thereto is not hindered.

In an embodiment according to the first aspect of the present disclosure, the conduit 4a of the flow deflector comprises a curved deflection surface 4a' for deflecting a flow from a transverse chamber side 2c perpendicularly towards the attachment side 2b, and vice versa.

In an embodiment according to the first aspect of the present disclosure, the conduit 4a of the flow deflector 4 is open between an opening thereof towards the chamber side 2c and an opening thereof towards the attachment side.

In an embodiment according to the first aspect of the present disclosure, the flow deflector 4 comprises a plurality of conduits 4a laterally separated from each other with one or more intermediate walls 4b.

This enables flow running through the plurality of conduits 4a to be aligned with an associated collector channel 9a on a filter plate 6, thus reducing turbulence of the flow and associated problems, such as solids build-up or accumulation. The collector channels 9a on the filter plate 6 are suitably provided a plurality of distinct openings, as opposed to a single larger opening, so as to achieve a required structural strength.

Should the flow deflector 4 be provided with a plurality of conduits 4a and intermediate walls 4b, in connection with the first attachment pins 3 being provided on the filter chamber side 2c with respect to the flow deflector 4 and aligned therewith, the first attachment pins 3 are most suitably aligned with the intermediate walls 4b, such that they interfere with the flow as little as possible.

**In** an embodiment according to the first aspect of the present disclosure, the outlet cover 1 comprises one or more second attachment pins 5 protruding perpendicularly from the attachment side 2b of the base 2.

Such second attachment pins 5 are provide additional support for the outlet cover 1, and may additionally be used for attaching a filter diaphragm **11** to the filter plate 6, as described in more detail below in connection with an embodiment of the third aspect of the present disclosure, while providing additional support for the outlet cover 1.

Preferably, but not necessarily, such one or more second attachment pins 5 are hollow and have an inside open towards both the attachment side 2b and the outer side 2a, through the base 2. This allows any possible pressure build-up within the second attachment hole 10b of the filter plate 6 to equalize through the hollow inside of the second attachment pin 5.

Preferably, but not necessarily, such one or more second attachment pins 5 are arranged on one or more lateral sides 2d with respect to the flow deflector 4, suitably aligned therewith.

As the flow deflector 4 forms a relatively large unattached (to the filter plate) portion of the outlet cover 1, the one or more second attachment pins 5 accordingly is advantageous, as increased support is achieved.

Moreover, if the outlet cover 1 is associated with a filter plate assembly equipped with a filter diaphragm **11,** inherently equipped with a flow opening 13 for receiving the flow deflector 4 therethrough, arranging the second attachment pins 5 accordingly provides increased support and secures the diaphragm **11** around the flow opening 13, thereby preventing solids build-up between the diaphragm and the filter plate 6, and/or between the diaphragm **11** and the outlet cover 1.

It should be noted that the present disclosure encompasses any combination of the embodiments, or variants thereof, of the first aspect, as discusses above.

According to a second, unclaimed aspect of the present disclosure, a filter plate 6 for a recessed type filter, such as a filter press or a tower press is provided. Most suitably, the filter plate 6 is suitable for a recessed plate -type filter equipped with a diaphragm for squeezing a filter cake formed in a filter chamber.

The filter plate 6 comprises a frame region 7 surrounding and having an increased thickness with respect to the remaining portion of the filter plate 6, and at least on a first surface of the diaphragm filter plate, a web region confined by, and recessed with respect to the frame region 7.

The filter plate 6 further comprises an internal collector duct 9 with one or more collector channels 9a opening towards the web region so as to provide fluid communication between the collector duct 9 and the web region.

The filter plate 6 further comprises one or more first attachment holes 10a for receiving the one or more first attachment pin 3 of the outlet cover 1, as discussed above in connection with the first aspect of the present disclosure.

Particularly, the one or more first attachment holes 10a have an inner diameter increasing towards a bottom of the hole 10a. Such first attachment holes 10a may be implemented, e.g. b providing the opening of such a hole 10a with an overhang, or correspondingly, providing the bottom of such a hole 10a with an undercut. Moreover, the first attachment hole 10a could be provided with an inclined side wall.

This ensures, that an extendable portion 3b of a first attachment pin 3 of an outlet cover 1 form-fittingly engages with the first attachment hole 10a. In other words, the first attachment pin 3 can not be pulled out of the first attachment hole 10a after the extendable portion 3b has been radially extended, because the outer diameter of the extendable portion 3b has extended so as to exceed the inner diameter near the opening of the first attachment hole 10a. At the same time, the first attachment pin 3 may be allowed movement deeper in to the first attachment hole 10a, e.g. upon pressing adjacent filter plate assemblies together during a filtration cycle of an associated filter press. This increases the longevity of the outlet cover 1 and prevents a securing element 15 inserted into the first attachment pin 3 from stripping the threads thereof.

Preferably, but not necessarily, the one or more first attachment holes 10a are arranged on a filter chamber side 2c with respect to the one or more collector channels 9a, preferably laterally between two adjacent collector channels 9a.

As discussed above, in connection with the first aspect of the present disclosure, providing first attachment holes 10a (and associated first attachment pins 3) on a filter chamber side 2c with respect to the collector channels 9a (and an associated flow deflector 4) improves the support for the outlet cover, and prevents a filter cake being discharged from damaging or of deforming the outlet cover 1. Additionally, this prevents solids build-up in connection with a flow opening 14 of a filter diaphragms 11, if such a diaphragm 11 is used.

In an embodiment according to the second aspect of the present disclosure, the filter plate 6 has a recessed area for receiving a portion of the flow deflector 4, such that the flow deflector 4 is seated against the recessed area.

This simultaneously improves the sealing between the flow deflector 4 of the outlet cover 1 and the support between the outlet cover 1 and the filter plate 6. Particularly transverse and lateral loads exerted on the outlet cover 1 (such as a filter cake being partially and temporarily carried by the outlet cover 1 during cake discharge) may predominantly be supported via the flow deflector 4, while the one or more first attachment pins 3 secure the outlet cover to the filter plate 6, and any possible second attachment pins 5 help prevent rotation of the outlet cover 1.

In an embodiment according to the second aspect of the present disclosure, the filter plate 6 comprises one or more second attachment holes 10b for receiving the one or more second attachment pins 5. This both increases the support for the outlet cover 1, and where a filter diaphragm 11 is provided, may be used for attaching the diaphragm 11 to the filter plate 6 at the outlet cover 1.

Preferably, but not necessarily, the one or more second attachment holes 10b are preferably arranged on either or both lateral sides 2d with respect to the collector channels 9a.

As discussed above, in connection with second attachment pins 5 of the outlet cover 1 according to the first aspect, this improves the support of the outlet 1 cover near the flow deflector 4, which constitutes a relatively large, unsupported area, and helps prevent build-up of solids between the diaphragm 11 (is provided) and the filter plate 6 and/or the outlet cover 1.

Preferably, but not necessarily, also the second attachment hole 10b have an inner diameter increasing toward the bottom thereof. Again, this could be done by providing the opening of the second attachment hole 10b with an overhang, the bottom thereof with an undercut, or an inclined side wall. This would enable second attachment studs 14 formed on a diaphragm to form-fittingly occupy a space below the opening of the second attachment hole 10b, thereby preventing the second attachment studs 14 from being pulled out of the second attachment hole 10b. In practice, the second attachment pins 5 inserted into the second attachment studs 14, prevents the second attachment studs 14 from deforming to a form fitting through the opening of the second attachment hole 10b.

It should be noted that the present disclosure encompasses any combination of the embodiments, or variants thereof, of the second aspect, as discusses above.

According to a third aspect of the present disclosure, a filter plate assembly for a recessed type filter, such as a filter press or a tower press, is provided. Most suitably, the filter plate assembly is suitable for a recessed plate -type filter equipped with a diaphragm for squeezing a filter cake formed in a filter chamber.

The filter plate assembly comprises an outlet cover 1 according to the first aspect of the present disclosure, and a filter plate according to the second aspect of the present disclosure.

The outlet cover 1 is attached to the filter plate 6, such that the first attachment pin 3 is at least partially received within the first hole 10a of the of the filter plate 6, such that at least the extendable portion 3b is situated within the first attachment hole 10a.

Moreover, the flow deflector 4 is seated against the filter plate 6, such that an opening of the flow deflector's 4 conduit 4a towards the filter plate 6 is aligned with a collector channel 9a of the filter plate 6, and an opening of the flow deflector's 4 conduit 4a towards the filter chamber is elevated from the filter plate 6.

The filter plate assembly further comprises a securing element 15 inserted into the hollow inside of the first attachment pin 3, thereby deforming the extendable portion 3b so as occupy a diameter larger than that of an opening of the first attachment hole 10a, and securing the first attachment pin 3 to the first attachment hole 10a. This from-fitted engagement between the first attachment pin 3 and the first attachment hole 10a, prevents the first attachment pin 3 from being pulled out of the first attachment hole 10a.

In an embodiment according to the third aspect of the present disclosure, the first attachment pin 3 and the first attachment hole 10a are configured such that the longitudinal end of the first attachment pin 3 does not reach the bottom of the first attachment hole 10a. This allows a limited clearance between the first attachment pin 3 and the first attachment hole 10a towards each other, e.g., when adjacent filter plate assemblies are pressed against each other during a filtration cycle of an associated filter press. This improves the longevity of the outlet cover 1, and prevents a securing element 15 form stripping the thread on the first attachment hole 10a.

In an embodiment according to the third aspect of the present disclosure, the filter plate assembly further comprises a diaphragm 11 releasably attached to the filter plate 6, so as to extend over the web region of the plate 6. The purpose of the diaphragm 11 is to squeeze reaming liquid contents out of a filter cake formed within a filter chamber.

The diaphragm 11 comprises a sheet-like body having a flexible structure. That is, the body of the diaphragm 11 is able to yield without permanent deformation.

'The diaphragm further comprises one or more first openings 12 extending through the body for receiving the one or more first attachments pins 3 of the outlet cover 1 therethrough. The diaphragm also comprises a flow opening 13 extending through the body for receiving the flow deflector 4 of the outlet cover 1 therethrough.

The outlet cover 1 is attached to the filter plate through the diaphragm 11, such that the first attachment pin 3 extends through the first opening 12 of the diaphragm 11 and is received within the first hole 10a of the of the filter plate 6.

Moreover, the flow deflector 4 extends through the flow opening 13 of the filter diaphragm 11 and is seated against the filter plate 6, such that an opening of the flow deflector's 4 conduit 4a towards the filter plate 6 is aligned with a collector channel 9a of the filter plate. The opening of the flow deflector's 4 conduit 4a towards the filter chamber is elevated from the diaphragm 11 in a direction away from the filter plate, thus allowing filtrate flow from the filter chamber to enter the conduit 4a.

If the filter plate assembly is provided with a diaphragm 11, the outlet cover 1 is preferably, but not necessarily, equipped with one or more second attachment pins 5, as discussed above in connection with any embodiment, or variant thereof, of the first aspect including such second attachment pins. Correspondingly, the filter plate 6 is preferably, but not necessarily, equipped one or more second attachment holes 10b, as discussed above in connection with any embodiment, or variant thereof, of the second aspect including such second attachment hole 10b. In such a case, the one or more second attachment pins 5 are at least partially received within the second attachment holes 10b.

Furthermore, the diaphragm 11 preferably, but not necessarily, further comprises one or more a second attachment studs 14 for attaching the diaphragm 11 to the filter plate 6. Such second attachment studs 14 extending in a direction perpendicular to the diaphragm body towards the plate 6, and being equipped with an opening extending through the filter diaphragm 11, between opposing sides thereof,

The one or more second attachment studs 14 of the diaphragm may then be received in the one or more second attachment holes 10b of the filter plate 6. Moreover, the one or more second attachment pins 5 of the outlet cover 1 are inserted into the second attachment studs 14 so as to elastically compress the second attachment stud 14 against the second attachment hole 10b thereby securing the diaphragm 11 to the filter plate 6.

In an embodiment according to the third aspect of the present disclosure, the securing element 15 is a screw, preferably a self-tapping screw, which can be screwed into the first attachment pin 3, even without a pre-existing thread. Alternatively, the securing element 15 may be provided as an additional pin or rivet inserted into the hollow inside of the first attachment pin 3, although a screw is considered particularly advantageous, as it enables easy removal thereof.

In an embodiment according to the third aspect of the present disclosure, the filter plate 6 has a recessed area for receiving a portion of the flow deflector 4, wherein the flow deflector 4 is seated against the recessed area.

This simultaneously improves the sealing between the flow deflector 4 of the outlet cover 1 and the support between the outlet cover 1 and the filter plate 6. Particularly transverse and lateral loads exerted on the outlet cover 1 (such as a filter cake being partially and temporarily carried by the outlet cover 1 during cake discharge) may predominantly be supported via the flow deflector 4, while the one or more first attachment pins 3 secure the outlet cover to the filter plate 6, and any possible second attachment pins 5 help prevent rotation of the outlet cover 1.

It should be noted that the present disclosure encompasses any combination of the embodiments, or variants thereof, of the third aspect, as discusses above.

According to a fourth aspect of the present disclosure, a recessed plate -type filter, such as a filter press or tower press, is provided.

The filter comprises a plurality of diaphragm filter plate assemblies according to any of the embodiments, or variants thereof, of the third aspect, as discussed above. The diaphragm filter plate assemblies are configured movable towards each other into a closed position in which a filter chamber is formed between adjacent diaphragm filter plate assemblies, and away from each to an open position in which adjacent diaphragm filter plate assemblies are spaced apart from each other.

The filter further comprises a filter medium arranged between adjacent diaphragm filter plate assemblies.

The filter further comprises a translation arrangement for moving the diaphragm filter plate assemblies towards each other so as to form a filter chamber between adjacent filter plates, and away from each other so as to open the filter chamber.

The filter further comprises a feed arrangement for feeding slurry into the filter chamber.

The filter further comprises a recovering arrangement for recovering filtrate from the filter chamber.

The filter further comprises a discharge arrangement for discharging a filter cake formed within the filter chamber.

### LIST OF REFERENCE NUMERALS

1 - outlet cover
2 - planar base
2a - outer side of outlet cover
2b - attachment side of outlet cover
2c - chamber side of outlet cover
2d - lateral side of outlet cover
3 - first attachment pin
3a - hollow shell of first attachment pin
3b - radially extendable portion of first attachment pin
3b' - cut out separating radially extendable portion of first attachment pin 3 from remaining
shell 3a.
4 - flow deflector
4a - conduit of flow deflector
4a' - curved flow surface
4b - intermediate wall of flwo deflector
5 - second attachment pin
6 - filter plate
7 - frame region of filter plate
9 - internal collector duct
9a - collector channel of internal collector duct
10a - first attachment hole
10b - second attachment hole
11 - diaphragm
12 - first opening of diaphragm
13 - flow opening of diaphragm
14 - second attachment stud of diaphragm
15 - securing element

## Claims

1. An outlet cover (1) for a recessed plate -type filter, such as a filter press or a tower press, comprising:
a planar base (2) having a generally flat side, defining an outer side (2a) of the outlet cover, and an opposite side, defining an attachment side (2b) of the outlet cover, to be attached against a diaphragm filter plate assembly, and
one or more a first attachment pins (3) protruding perpendicularly for a distance from the attachment side (2b) of the base (2),
wherein at least a radially extendable portion (3b) is provided on the first attachment pin (3), so as to allow the extendable portion (3b) to radially deform away from the remaining shell (3a) by a radial force exerted on the extendable portion from the hollow inside of the first attachment pin (3), and
wherein the one or more first attachment pins (3) are fixed, preferably integral, parts of the base (2),
**characterized in that** the outlet cover (1) further comprises a flow deflector (4) protruding perpendicularly for a distance from the attachment side (2b) of the base (2), the flow deflector (4) comprising at least a conduit (4a) for deflecting a flow from a transverse chamber side (2c) perpendicularly towards the attachment side (2b), and vice versa,
wherein the first attachment pin (3) is spaced apart from the flow deflector (4), and
wherein the first attachment pin (3) has a hollow shell (3a), the inside of which opens at least towards the outer side, through the base (2).

2. The outlet cover (1) according to Claim 1, **characterized:**
**in that** the radially extendable portion (3b) of the first attachment pin (3) is provided at a distal portion of the first attachment protrusion, and/or
**in that** the inside of the hollow shell (3a) additionally opens towards the attachment side (2b), and/or
**in that** the expandable portion (3b) is formed partially separated from the remaining shell (3a) of the first attachment pin (3), so as to allow the extendable portion (3b) to radially deflect away from the remaining shell (3a) by a radial force exerted on the extendable portion from the hollow inside of the first attachment pin (3), and/or
**in that** the first attachment pin (3) has an inner diameter decreasing towards the distal end thereof.

3. The outlet cover (1) according to any of the preceding Claims 1 or 2, **characterized in that** the radially extendable portion (3b) of the first attachment pin (3) is at least partially separated from the remaining shell (3a) by at least one cut-out (3b') extending radially along the shell (3a) and axially along the first attachment pin (3).

4. The outlet cover (1) according to Claim 3, **characterized in that** the at least one cut-out (3b') extends from a distal end of the first attachment pin (3) towards the planar base (3).

5. The outlet cover (1) according to any of the preceding Claims 1-4, **characterized in that** the base (2) of the outlet cover (1) extends from the flow deflector (4) for a distance towards the chamber side (2c).

6. The outlet cover (1) according to Claim 5, **characterized in that** the one or more first attachment pins (3) are arranged aligned with the flow deflector (4), on the chamber side (2c) with respect thereto.

7. The outlet cover (1) according to any of the preceding Claims 1-6, **characterized**
**in that** the conduit (4a) of the flow deflector comprises a curved deflection surface (4a') for deflecting a flow from a transverse chamber side (2c) perpendicularly towards the attachment side (2b), and vice versa, and/or
**in that** the conduit (4a) of the flow deflector (4) is open between an opening thereof towards the chamber side (2c) and an opening thereof towards the attachment side, and/or
**in that** the flow deflector comprises a plurality of conduits (4a) laterally separated from each other with one or more intermediate walls (4b).

8. The outlet cover (1) according to any of the preceding Claims 1-7 **characterized in that** the outlet cover (1) comprises one or more second attachment pins (5) protruding perpendicularly from the attachment side (2b) of the base (2).

9. The outlet cover (1) according to Claim 8, **characterized**
**in that** the one or more second attachment pins (5) are hollow having an inside open towards both the attachment side (2b) and the outer side (2), through the base (2), and/or
**in that** the one or more second attachment pins (5) are arranged on one or more lateral sides (2d) with respect to the flow deflector (4).

10. A filter plate assembly for a recessed type filter, such as a filter press or a tower press, **characterized by** comprising the outlet cover (1) according to any of the preceding Claims 1-9, and a filter plate (6), the filter plate (6) comprising:
- a frame region (7) surrounding and having an increased thickness with respect to the remaining portion of the filter plate (6);
- at least on a first surface of the diaphragm filter plate, a web region confined by, and recessed with respect to the frame region (7);
- an internal collector duct (9) with one or more collector channel (9a) opening towards the web region so as to provide fluid communication between the collector duct (9) and the web region, and
- one or more first attachment holes (10a) for receiving the one or more first attachment pin (3) of the outlet cover (1), the one or more first attachment holes (10a) having an inner diameter increasing towards a bottom of the hole (10a)
wherein the outlet cover (1) is attached to the filter plate (6), such that
- the first attachment pin (3) is at least partially received within the first hole (10a) of the of the filter plate (6), such that at least the extendable portion (3b) is situated within the first attachment hole (10a), and
- the flow deflector (4) is seated against the filter plate (6), such that an opening of the flow deflector's (4) conduit (4a) towards the filter plate (6) is aligned with a collector channel (9a) of the filter plate (6), and an opening of the flow deflector's (4) conduit (4a) towards the filter chamber is elevated from the filter plate (6), and
wherein the filter plate assembly further comprises a securing element (15) inserted into the hollow inside of the first attachment pin (3), thereby deforming the extendable portion (3b) so as occupy a diameter larger than that of an opening of the first attachment hole (10a), and securing the first attachment pin (3) to the first attachment hole (10a).

11. The filter plate assembly according to Claim 10, **characterized in that** the first attachment pin (3) and the first attachment hole (10a) are configured such that the longitudinal end of the first attachment pin (3) does not reach the bottom of the first attachment hole (10a).

12. The filter plate assembly according to Claim 10 or 11, **characterized in that** the filter plate assembly further comprises a diaphragm (11) releasably attached to the filter plate (6), so as to extend over the web region of the plate (6), the diaphragm, in turn, comprising:
- a sheet-like body having a flexible structure;
- one or more first openings (12) extending through the body for receiving the one or more first attachments pins (3) of the outlet cover (1) therethrough, and
- a flow opening (13) extending through the body for receiving the flow deflector (4) of the outlet cover (1) therethrough,
wherein the outlet cover (1) is attached to the filter plate through the diaphragm (11), such that:
- the first attachment pin (3) extends through the first opening (12) of the diaphragm (11) and is received within the first hole (10a) of the of the filter plate (6), and
- the flow deflector (4) extends through the flow opening (13) of the filter diaphragm (11) and is seated against the filter plate (6), such that an opening of the flow deflector's (4) conduit (4a) towards the filter plate (6) is aligned with a collector channel (9a) of the filter plate (6), and an opening of the flow deflector's (4) conduit (4a) towards the filter chamber is elevated from the diaphragm (11) in a direction away from the filter plate.

13. The filter plate assembly according to any of the preceding Claims 10-12, **characterized by** the outlet cover (1) according to Claims 8 or 9,
the filter plate (6) comprises one or more second attachment holes (10b) for receiving the one or more second attachment pins (5),
wherein the one or more second attachment holes (10b) are preferably arranged on either or both lateral sides (2d) with respect to the collector channels (9a), and
wherein the one or more second attachment pins (5) are at least partially received within the second attachment holes (10b).

14. The filter plate assembly according to Claim 12 in combination with Claim 13, **characterized in that** the diaphragm (11) further comprises one or more a second attachment studs (14) for attaching the diaphragm (11) to the filter plate (6), the second attachment studs (14) extending in a direction perpendicular to the diaphragm body towards the plate (6), and being equipped with an opening extending through the filter diaphragm (11), between opposing sides thereof,
wherein the one or more second attachment studs (14) of the diaphragm are received in the one or more second attachment holes (10b) of the filter plate (6), and
wherein the one or more second attachment pins (5) of the outlet cover (1) are inserted into the second attachment studs (14) so as to elastically compress the second attachment stud (14) against the second attachment hole (10b) thereby securing the diaphragm (11) to the filter plate (6).

15. The filter plate assembly according to any of the preceding Claims 10-14, **characterized in that** the securing element (15) is a screw, and/or
**in that** the filter plate (6) has a recessed area for receiving a portion of the flow deflector (4) wherein the flow deflector (4) is seated against the recessed area.

16. The filter plate assembly according to any of the preceding claims 10-15, **characterized**
**in that** the one or more first attachment holes (10a) are arranged on a filter chamber side (2c) with respect to the one or more collector channels (9a), preferably laterally between two adjacent collector channels (9a), and/or
**in that** the filter plate (6) has a recessed area for receiving a portion of the flow deflector (4) such that the flow deflector (4) is seated against the recessed area.

17. A recessed plate -type filter, such as a filter press or tower press, **characterized in that** the filter comprises:
a plurality of diaphragm filter plate assemblies according to any of the preceding Claims 10-16, wherein the diaphragm filter plate assemblies are configured movable towards each other into a closed position in which a filter chamber is formed between adjacent diaphragm filter plate assemblies, and away from each to an open position in which adjacent diaphragm filter plate assemblies are spaced apart from each other;
a filter medium arranged between adjacent diaphragm filter plate assemblies;
a translation arrangement for moving the diaphragm filter plate assemblies towards each other so as to form a filter chamber between adjacent filter plates, and away from each other so as to open the filter chamber;
a feed arrangement for feeding slurry into the filter chamber;
a recovering arrangement for recovering filtrate from the filter chamber, and
a discharge arrangement for discharging a filter cake formed within the filter chamber.

## Patentansprüche

1. Auslassabdeckung (1) für einen aussparungsplattenartigen Filter, wie eine Filterpresse oder eine Turmpresse, umfassend:
eine plane Grundplatte (2) mit einer im Wesentlichen flachen Seite, die eine Außenseite (2a) der Auslassabdeckung definiert, und einer gegenüberliegenden Seite, die eine Befestigungsseite (2b) der an einer Membranfilterplattenanordnung zu befestigenden Auslassabdeckung definiert, und
einen oder mehrere erste Befestigungsstifte (3), die rechtwinklig über einen Abstand aus der Befestigungsseite (2b) der Grundplatte (2) herausragen,
wobei am ersten Befestigungsstift (3) mindestens ein radial erweiterbarer Abschnitt (3b) dergestalt vorgesehen ist, dass sich der erweiterbare Abschnitt (3b) durch eine radiale Kraft, die vom Innenhohlraum des ersten Befestigungsstifts (3) auf den erweiterbaren Abschnitt einwirkt, weg von der restlichen Hülle (3a) radial verformen kann, und
wobei es sich bei dem einen oder den mehreren Befestigungsstiften (3) um feststehende, bevorzugt einstückig ausgebildete, Teile der Grundplatte (2) handelt,
**gekennzeichnet dadurch, dass** die Auslassabdeckung (1) ferner ein Strömungsleitelement (4) umfasst, das rechtwinklig über einen Abstand aus der Befestigungsseite (2b) der Grundplatte (2) herausragt, wobei das Strömungsleitelement (4) mindestens einen Kanal (4a) umfasst, um eine Strömung von einer quer verlaufenden Kammerseite (2c) rechtwinklig zur Befestigungsseite (2b) hin umzulenken, und umgekehrt,
wobei der erste Befestigungsstift (3) abständig zum Strömungsleitelement (4) angeordnet ist, und
wobei der erste Befestigungsstift (3) eine hohle Hülle (3a) aufweist, deren Innenraum durch die Grundplatte (2) hindurch mindestens zur Außenseite hin offen ist.

2. Auslassabdeckung (1) nach Anspruch 1, **gekennzeichnet dadurch,**
**dass** der radial erweiterbare Abschnitt (3b) des ersten Befestigungsstifts (3) an einem fernen Abschnitt des ersten Befestigungsvorsprungs vorgesehen ist, und/oder
**dass** sich der Innenraum der hohlen Hülle (3a) zusätzlich zur Befestigungsseite (2b) hin offen ist, und/oder
**dass** der erweiterbare Abschnitt (3b) teilweise getrennt von der übrigen Hülle (3a) des ersten Befestigungsstifts (3) ausgebildet ist, so dass sich der erweiterbare Abschnitt (3b) durch eine radiale Kraft, die vom Innenhohlraum des ersten Befestigungsstifts (3) auf den erweiterbaren Abschnitt einwirkt, weg von der restlichen Hülle (3a) radial auslenken kann, und/oder
**dass** der erste Befestigungsstift (3) einen Innendurchmesser aufweist, der zu seinem fernen Ende hin abnimmt.

3. Auslassabdeckung (1) nach einem der vorhergehenden Ansprüche 1 oder 2, **gekennzeichnet dadurch, dass** der radial erweiterbare Abschnitt (3b) des ersten Befestigungsstifts (3) über mindestens einen Ausschnitt (3b'), der sich radial entlang der Hülle (3a) und axial entlang des ersten Befestigungsstifts (3) erstreckt, mindestens teilweise von der restlichen Hülle (3a) getrennt ist.

4. Auslassabdeckung (1) nach Anspruch 3, **gekennzeichnet dadurch, dass** sich der mindestens eine Ausschnitt (3b') vom fernen Ende des ersten Befestigungsstifts (3) zur planen Grundplatte (3) hin erstreckt.

5. Auslassabdeckung (1) nach einem der vorhergehenden Ansprüche 1 bis 4, **gekennzeichnet dadurch, dass** sich die Grundplatte (2) der Auslassabdeckung (1) ausgehend vom Strömungsleitelement (4) über einen Abstand hin zur Kammerseite (2c) erstreckt.

6. Auslassabdeckung (1) nach Anspruch 5, **gekennzeichnet dadurch, dass** der eine oder die mehreren ersten Befestigungsstifte (3) in Ausrichtung zum Strömungsleitelement (4) auf der Kammerseite (2c) diesbezüglich angeordnet sind.

7. Auslassabdeckung (1) nach einem der vorhergehenden Ansprüche 1 bis 6, **gekennzeichnet dadurch,**
**dass** der Kanal (4a) des Strömungsleitelements eine gekrümmte Ablenkfläche (4a') aufweist, um eine Strömung von einer quer verlaufenden Kammerseite (2c) rechtwinklig zur Befestigungsseite (2b) hin abzulenken, und umgekehrt, und/oder
**dass** der Kanal (4a) des Strömungsleitelements (4) zwischen seiner Öffnung zur Kammerseite (2c) hin und seiner Öffnung zur Befestigungsseite hin offen ist, und/oder dass das Strömungsleitelement mehrere Kanäle (4a) umfasst, die mit einer oder mehreren Zwischenwänden (4b) seitlich voneinander getrennt sind.

8. Auslassabdeckung (1) nach einem der vorhergehenden Ansprüche 1 bis 7, **gekennzeichnet dadurch, dass** die Auslassabdeckung (1) einen oder mehrere zweite Befestigungsstifte (5) umfasst, die rechtwinklig aus der Befestigungsseite (2b) der Grundplatte (2) herausragen.

9. Auslassabdeckung (1) nach Anspruch 8, **gekennzeichnet dadurch,**
**dass** der eine oder die mehreren zweiten Befestigungsstifte (5) hohl sind und einen Innenraum aufweisen, der durch die Grundplatte (2) hindurch sowohl zur Befestigungsseite (2b) hin als auch zur Außenseite (2) hin offen sind, und/oder
**dass** der eine oder die mehreren zweiten Befestigungsstifte (5) in Bezug auf das Strömungsleitelement (4) auf einer oder mehreren lateralen Seiten (2d) angeordnet sind.

10. Filterplattenanordnung für einen aussparungsplattenartigen Filter, wie eine Filterpresse oder eine Turmpresse, **gekennzeichnet dadurch, dass** sie die Auslassabdeckung (1) nach einem der vorhergehenden Ansprüche 1 bis 9 und eine Filterplatte (6) umfasst, wobei die Filterplatte (6) umfasst:
- einen Rahmenbereich (7), der den übrigen Abschnitt der Filterplatte (6) umgibt und in Bezug zu diesem eine höhere Dicke aufweist;
- mindestens auf einer ersten Oberfläche der Membranfilterplatte einen durch den Rahmenbereich (7) begrenzten und in Bezug zu diesem ausgesparten Stegbereich;
- eine interne Sammelleitung (9) mit einem oder mehreren Sammelkanälen (9a), die sich zum Stegbereich hin öffnen, um eine strömungstechnische Verbindung zwischen der Sammelleitung (9) und dem Stegbereich bereitzustellen, und
- eine oder mehrere erste Befestigungsbohrungen (10a) zur Aufnahme des einen oder der mehreren ersten Befestigungsstifte (3) der Auslassabdeckung (1), wobei die eine oder mehreren ersten Befestigungsbohrungen (10a) einen Innendurchmesser aufweisen, der sich zum Grund der Bohrung (10a) hin erhöht,
wobei die Auslassabdeckung (1) an der Filterplatte (6) befestigt ist, so dass
- der erste Befestigungsstift (3) mindestens teilweise in der ersten Bohrung (10a) der Filterplatte (6) dergestalt aufgenommen ist, dass sich der erweiterbare Abschnitt (3b) in der ersten Befestigungsbohrung (10a) befindet, und
- das Strömungsleitelement (4) dergestalt an der Filterplatte (6) sitzt, dass eine Öffnung des Kanals (4a) des Strömungsleitelements (4) zur Filterplatte (6) hin auf einen Sammelkanal (9a) der Filterplatte (6) ausgerichtet ist und eine Öffnung des Kanals (4a) des Strömungsleitelements (4) zur Filterkammer hin gegenüber der Filterplatte (6) erhöht ist, und
wobei die Filterplattenanordnung ferner ein in den Innenhohlraum des ersten Befestigungsstifts (3) eingeführtes Sicherungselement (15) umfasst, wodurch der erweiterbare Abschnitt (3b) so verformt ist, dass er einen größeren Durchmesser als eine Öffnung der ersten Befestigungsbohrung (10a) einnimmt, und der erste Befestigungsstift (3) an der ersten Befestigungsbohrung (10a) gesichert ist.

11. Filterplattenanordnung nach Anspruch 10, **gekennzeichnet dadurch, dass** der erste Befestigungsstift (3) und die erste Befestigungsbohrung (10a) so ausgelegt sind, dass das Längsende des ersten Befestigungsstifts (3) nicht bis zum Grund der ersten Befestigungsbohrung (10a) reicht.

12. Filterplattenanordnung nach Anspruch 10 oder 11, **gekennzeichnet dadurch, dass** die Filterplattenanordnung ferner eine Membran (11) umfasst, die an der Filterplatte (6) lösbar befestigt ist, so dass sie sich über den Stegbereich der Platte (6) erstreckt, wobei die Membran ihrerseits umfasst:
- einen flächigen Körper mit einer flexiblen Struktur;
- eine oder mehrere erste Öffnungen (12), die sich durch den Körper erstrecken, um den einen oder die mehreren ersten Befestigungsstifte (3) der Auslassabdeckung (1) in sich aufzunehmen, und
- eine Strömungsöffnung (13), die sich durch den Körper streckt, um das Strömungsleitelement (4) der Auslassabdeckung (1) in sich aufzunehmen,
wobei die Auslassabdeckung (1) über die Membran (11) an der Filterplatte befestigt ist, so dass:
- der erste Befestigungsstift (3) sich durch die erste Öffnung (12) der Membran (11) hindurch erstreckt und in der ersten Bohrung (10a) der Filterplatte (6) aufgenommen ist, und
- das Strömungsleitelement (4) sich durch die Strömungsöffnung (13) der Filtermembran (11) erstreckt und so an der Filterplatte (6) sitzt, dass eine Öffnung des Kanals (4a) des Strömungsleitelements (4) zur Filterplatte (6) hin auf einen Sammelkanal (9a) der Filterplatte (6) ausgerichtet ist und eine Öffnung des Kanals (4a) des Strömungsleitelements (4) zur Filterkammer hin in einer von der Filterplatte wegweisenden Richtung gegenüber der Membran (11) erhöht ist.

13. Filterplattenanordnung nach einem der vorhergehenden Ansprüche 10 bis 12, **gekennzeichnet durch** die Auslassabdeckung (1) nach Anspruch 8 oder 9,
wobei die Filterplatte (6) eine oder mehrere zweite Befestigungsbohrungen (10b) zur Aufnahme des einen oder der mehreren zweiten Befestigungsstifte (5) umfasst,
wobei die eine oder mehreren zweiten Befestigungsbohrungen (10b) vorzugsweise auf einer oder beiden lateralen Seiten (2d) in Bezug auf die Sammelkanäle (9a) angeordnet sind, und
wobei der eine oder die mehreren zweiten Befestigungsstifte (5) mindestens teilweise in den zweiten Befestigungsbohrungen (10b) aufgenommen sind.

14. Filterplattenanordnung nach Anspruch 12 in Kombination mit Anspruch 13, **gekennzeichnet dadurch, dass** die Membran (11) ferner einen oder mehrere zweite Befestigungsbolzen (14) umfasst, um die Membran (11) an der Filterplatte (6) zu befestigen, wobei die zweiten Befestigungsbolzen (14) sich in einer Richtung rechtwinklig zum Membrankörper zur Platte (6) hin erstrecken und mit einer Öffnung ausgestattet sind, die sich durch die Filtermembran (11) hindurch zwischen deren gegenüberliegenden Seiten erstreckt,
wobei der eine oder die mehreren zweiten Befestigungsbolzen (14) der Membran in der einen oder den mehreren zweiten Befestigungsbohrungen (10b) der Filterplatte (6) aufgenommen sind, und
wobei der eine oder die mehreren zweiten Befestigungsstifte (5) der Auslassabdeckung (1) in die zweiten Befestigungsbolzen (14) dergestalt eingeführt sind, dass sie den zweiten Befestigungsbolzen (14) elastisch gegen die zweite Befestigungsbohrung (10b) drücken und dadurch die Membran (11) an der Filterplatte (6) sichern.

15. Filterplattenanordnung nach einem der vorhergehenden Ansprüche 10 bis 14, **gekennzeichnet dadurch, dass** das Sicherungselement (15) eine Schraube ist, und/oder
dadurch, dass die Filterplatte (6) einen ausgesparten Bereich zur Aufnahme eines Abschnitts des Strömungsleitelements (4) aufweist, wobei das Strömungsleitelement (4) anliegend am ausgesparten Bereich sitzt.

16. Filterplattenanordnung nach einem der vorhergehenden Ansprüche 10 bis 15, **gekennzeichnet dadurch,**
**dass** die eine oder mehreren ersten Befestigungsbohrungen (10a) in Bezug auf den einen oder die mehreren Sammelkanäle (9a) auf einer Filterkammerseite (2c), bevorzugt seitlich zwischen zwei angrenzenden Sammelkanälen (9a), angeordnet sind, und/oder
**dass** die Filterplatte (6) einen ausgesparten Bereich zur Aufnahme eines Abschnitts des Strömungsleitelements (4) aufweist, so dass das Strömungsleitelement (4) anliegend am ausgesparten Bereich sitzt.

17. Aussparungsplattenartiger Filter, wie eine Filterpresse oder eine Turmpresse, **gekennzeichnet dadurch, dass** der Filter umfasst:
mehrere Membranfilterplattenanordnungen nach einem der vorhergehenden Ansprüche 10 bis 16, wobei die Membranfilterplattenanordnungen so ausgelegt sind, dass sie aufeinander zu in eine geschlossene Position, in der eine Filterkammer zwischen angrenzenden Membranfilterplattenanordnungen ausgebildet wird, und voneinander weg in eine offene Position, in der angrenzende Membranfilterplattenanordnungen zueinander beabstandet sind, bewegt werden können;
ein zwischen angrenzenden Membranfilterplattenanordnungen angeordnetes Filtermedium;
eine Translationsanordnung zum Bewegen der Membranfilterplattenanordnungen aufeinander zu, um eine Filterkammer zwischen angrenzenden Filterplatten auszubilden, und voneinander weg, um die Filterkammer zu öffnen;
eine Zuführungsanordnung zum Zuführen einer Suspension in die Filterkammer;
eine Abführungsanordnung zum Abführen von Filtrat aus der Filterkammer, und
eine Austragsanordnung zum Austragen eines in der Filterkammer ausgebildeten Filterkuchens.

## Revendications

1. Couvercle de sortie (1) pour un filtre du type à plaque en retrait, tel qu'un filtre-presse ou une presse à tour, comprenant :
une base plane (2) présentant une face essentiellement plate, définissant une face extérieure (2a) du couvercle de sortie et une face opposée définissant une face de fixation (2b) du couvercle de sortie devant être fixé contre un ensemble de plaque filtrante à diaphragme, et
une ou plusieurs premières goupilles de fixation (3) faisant saillie perpendiculairement à partir de la face de fixation (2b) de la base (2) sur une certaine distance,
dans lequel au moins une partie radialement extensible (3b) est prévue sur la première goupille de fixation (3) afin de permettre à la partie extensible (3b) de se déformer radialement en s'éloignant de l'enveloppe restante (3a) sous l'effet d'une force radiale exercée sur la partie extensible depuis l'intérieur creux de la première goupille de fixation (3), et
dans lequel lesdites une ou plusieurs goupilles de fixation (3) sont des parties fixes, de préférence solidaires, de la base (2),
**caractérisé en ce que** le couvercle de sortie (1) comprend également un déflecteur d'écoulement (4) faisant saillie perpendiculairement à partir de la face de fixation (2b) de la base (2) sur une certaine distance, le déflecteur d'écoulement (4) comprenant au moins un conduit (4a) destiné à dévier un écoulement depuis un côté chambre transversale (2c) perpendiculairement vers la face de fixation (2b), et inversement,
dans lequel la première goupille de fixation (4a) est espacée du déflecteur d'écoulement (4), et
dans lequel la première goupille de fixation (3) présente une enveloppe creuse (3a) dont l'intérieur est ouvert au moins vers la face extérieure, à travers la base.

2. Couvercle de sortie (1) selon la revendication 1, **caractérisé**
**en ce que** la partie radialement extensible (16) de la première goupille de fixation (2) est prévue à une partie distale de la première saillie de fixation, et/ou
**en ce que** l'intérieur de l'enveloppe creuse (3a) est en outre ouvert vers la face de fixation (2b), et/ou
**en ce que** la partie extensible (3b) est formée de manière partiellement séparée du reste de l'enveloppe (3a) de la première goupille de fixation (3) afin de permettre à la partie extensible (3b) de s'écarter radialement du reste de l'enveloppe (3a) sous l'effet d'une force radiale exercée sur la partie extensible depuis l'intérieur creux de la première goupille de fixation (3), et/ou
**en ce que** la première goupille de fixation (3) présente un diamètre intérieur décroissant vers son extrémité distale.

3. Couvercle de sortie (1) selon l'une des revendications précédentes 1 ou 2, **caractérisé en ce que** la partie radialement extensible (3b) de la première goupille de fixation (3) est au moins partiellement séparée du reste de l'enveloppe (3a) par au moins une découpe (3b') s'étendant radialement le long de l'enveloppe (3a) et axialement le long de la première goupille de fixation (3).

4. Couvercle de sortie (1) selon la revendication 3, **caractérisé en ce que** ladite au moins une découpe (3b') s'étend depuis une extrémité distale de la première goupille de fixation (3) vers la base plane (3).

5. Couvercle de sortie (1) selon l'une des revendications précédentes 1 à 4, **caractérisé en ce que** la base (2) du couvercle de sortie (1) s'étend à partir du déflecteur d'écoulement (4) sur une certaine distance vers le côté chambre (2c).

6. Couvercle de sortie (1) selon la revendication 5, **caractérisé en ce que** lesdites une ou plusieurs premières goupilles de fixation (3) sont disposées alignées avec le déflecteur d'écoulement (4) sur le côté chambre (2c) par rapport à celui-ci.

7. Couvercle de sortie (1) selon l'une des revendications précédentes 1 à 6, **caractérisé en ce que** le conduit (4a) du déflecteur d'écoulement comprend une surface de déviation courbe (4a') destinée à dévier un écoulement depuis un côté chambre transversale (2c) perpendiculairement vers la face de fixation (2b), et inversement, et/ou
**en ce que** le conduit (4a) du déflecteur d'écoulement (4) est ouvert entre une ouverture de celui-ci vers le côté chambre (2c) et une ouverture de celui-ci vers la face de fixation, et/ou
**en ce que** le déflecteur d'écoulement comprend plusieurs conduits (4a) séparés latéralement les uns des autres par une ou plusieurs parois intermédiaires (4b).

8. Couvercle de sortie (1) selon l'une des revendications précédentes 1 à 7, **caractérisé en ce que** le couvercle de sortie (1) comprend une ou plusieurs deuxièmes goupilles de fixation (5) faisant saillie perpendiculairement à partir de la face de fixation (2b) de la base (2).

9. Couvercle de sortie (1) selon la revendication 8, **caractérisé**
**en ce que** lesdites une ou plusieurs deuxièmes goupilles de fixation (5) sont creuses avec un espace intérieur ouvert tant vers la face de fixation (2b) que vers la face extérieure (2), à travers la base (2), et/ou
**en ce que** lesdites une ou plusieurs deuxièmes goupilles de fixation (5) sont disposées sur un ou plusieurs côtés latéraux (2d) par rapport au déflecteur d'écoulement (4).

10. Ensemble de plaque filtrante pour un filtre du type à plaque en retrait, tel qu'un filtre-presse ou une presse à tour, **caractérisé en ce qu'**il comprend le couvercle de sortie (1) selon l'une des revendications précédentes 1 à 9 et une plaque filtrante (6), la plaque filtrante (6) comprenant :
- une zone de cadre (7) entourant et présentant une épaisseur augmentée par rapport à la partie restante de la plaque filtrante (6);
- au moins sur une première surface de la plaque filtrante à diaphragme, une zone de nervure confinée par, et en retrait par rapport à, la zone de cadre (7);
- un conduit collecteur intérieur (9) avec un ou plusieurs canaux collecteurs (9a) ouverts vers la zone de nervure de manière à assurer une communication fluidique entre le conduit collecteur (9) et la zone de nervure, et
- un ou plusieurs premiers trous de fixation (10a) destinés à recevoir lesdites une ou plusieurs premières goupilles de fixation (3) du couvercle de sortie (1), lesdits un ou plusieurs premiers trous de fixation (10a) présentant un diamètre intérieur croissant vers le fond du trou (10a),
dans lequel le couvercle de sortie (1) est fixé à la plaque filtrante (6) de telle sorte que
- la première goupille de fixation (3) est logée au moins partiellement dans le premier trou (10a) de la plaque filtrante (6) de manière que la partie extensible (3b) est située à l'intérieur du premier trou de fixation (10a), et
- le déflecteur d'écoulement (4) prend appui contre la plaque filtrante (6) de manière qu'une ouverture du conduit (4a) du déflecteur d'écoulement (4) débouchant sur la plaque filtrante (6) est alignée avec un conduit collecteur (9a) de la plaque filtrante (6), et une ouverture du conduit (4a) du déflecteur d'écoulement (4) débouchant sur la chambre filtrante est surélevée par rapport à la plaque filtrante (6), et
dans lequel l'ensemble de plaque filtrante comprend également un élément de maintien (15) inséré dans l'intérieur creux de la première goupille de fixation (3) en déformant ainsi la partie extensible (3b) de telle sorte qu'elle occupe un diamètre supérieur à celui de l'ouverture du premier trou de fixation (10a) et assurant le maintien de la première goupille de fixation (3) dans le premier trou de fixation (10a).

11. Ensemble de plaque filtrante selon la revendication 10, **caractérisé en ce que** la première goupille de fixation (3) et le premier trou de fixation (10a) sont configurés de telle sorte que l'extrémité longitudinale de la première goupille de fixation (3) n'atteint pas le fond du premier trou de fixation (10a).

12. Ensemble de plaque filtrante selon la revendication 10 ou 11, **caractérisé en ce que** l'ensemble de plaque filtrante comprend également un diaphragme (11) fixé de manière amovible à la plaque filtrante (6) de manière à s'étendre sur la zone de nervure de la plaque (6), ledit diaphragme comprenant à son tour :
- un corps membranaire ayant une structure flexible;
- une ou plusieurs premières ouvertures (12) traversant le corps, destinées à recevoir lesdites une ou plusieurs premières goupilles de fixation (3) du couvercle de sortie (1), et
- une ouverture d'écoulement (13) traversant le corps, destinée à recevoir le déflecteur d'écoulement (4) du couvercle de sortie (1),
dans lequel le couvercle de sortie (1) est fixé à la plaque filtrante par le diaphragme (11) de telle sorte que :
- la première goupille de fixation (3) s'étend à travers la première ouverture (12) du diaphragme (11) et est logée dans le premier trou (10a) de la plaque filtrante (6), et
- le déflecteur d'écoulement (4) s'étend à travers l'ouverture d'écoulement (13) du diaphragme de filtre (11) et est logé contre la plaque filtrante (6) de manière qu'une ouverture du conduit (4a) du déflecteur d'écoulement (4) débouchant sur la plaque filtrante (6) est alignée avec un conduit collecteur (9a) de la plaque filtrante (6), et une ouverture du conduit (4a) du déflecteur d'écoulement (4) débouchant sur la chambre filtrante est surélevée par rapport au diaphragme (11) dans une direction s'éloignant de la plaque filtrante.

13. Ensemble de plaque filtrante selon l'une des revendications précédentes 10 à 12, **caractérisé par** le couvercle de sortie (1) selon la revendication 8 ou 9,
dans lequel la plaque filtrante (6) comprend un ou plusieurs deuxièmes trous de fixation (10b) destinés à recevoir lesdites une ou plusieurs deuxièmes goupilles de fixation (5),
dans lequel lesdits un ou plusieurs deuxièmes trous de fixation (10b) sont de préférence disposés sur un ou les deux côtés latéraux (2d) par rapport aux canaux collecteurs (9a), et
dans lequel lesdites une ou plusieurs deuxièmes goupilles de fixation (5) sont au moins partiellement logées dans les deuxièmes trous de fixation (10b).

14. Ensemble de plaque filtrante selon la revendication 12 en combinaison avec la revendication 13, **caractérisé en ce que** le diaphragme (11) comprend également un ou plusieurs deuxièmes goujons de fixation (14) destinés à fixer le diaphragme (11) à la plaque filtrante (6), les deuxièmes goujons de fixation (14) s'étendant dans une direction perpendiculaire au corps de diaphragme vers la plaque (6) et étant pourvus d'une ouverture s'étendant à travers le diaphragme de filtre (11) entre les faces opposées de celui-ci,
dans lequel lesdits un ou plusieurs deuxièmes goujons de fixation (14) du diaphragme sont logés dans lesdits un ou plusieurs deuxièmes trous de fixation (10b) de la plaque filtrante (6), et
dans lequel lesdites une ou plusieurs deuxièmes goupilles de fixation (5) du couvercle de sortie (1) sont insérées dans les deuxièmes goujons de fixation (14) de manière à presser le deuxième goujon de fixation (14) de manière élastique contre le deuxième trou de fixation (10b) en maintenant ainsi le diaphragme (11) sur la plaque filtrante (6).

15. Ensemble de plaque filtrante selon l'une des revendications précédentes 10 à 14, **caractérisé en ce que** l'élément de maintien (15) est une vis, et/ou
**en ce que** la plaque filtrante (6) présente une zone en retrait destinée à recevoir une partie du déflecteur d'écoulement (4), le déflecteur d'écoulement (4) prenant appui contre la zone en retrait.

16. Ensemble de plaque filtrante selon l'une des revendications précédentes 10 à 15, **caractérisé**
**en ce que** lesdits un ou plusieurs premiers trous de fixation (10b) sont disposés, par rapport auxdits un ou plusieurs canaux collecteurs (9a) sur un côté chambre filtrante (2c), de préférence latéralement entre deux canaux collecteurs adjacents (9a), et/ou
**en ce que** la plaque filtrante (6) comporte une zone en retrait destinée à recevoir une partie du déflecteur d'écoulement (4) de sorte que le déflecteur d'écoulement (4) prend appui contre la zone en retrait.

17. Filtre du type à plaque en retrait, tel qu'un filtre-presse ou une presse à tour, **caractérisé en ce que** le filtre comprend :
plusieurs ensembles de plaque filtrante à diaphragme selon l'une des revendications précédentes 10 à 16, dans lequel les ensembles de plaque filtrante à diaphragme sont configurés pour pouvoir être rapprochés les uns des autres pour une position fermée dans laquelle une chambre filtrante est formée entre des ensembles de plaque filtrante à diaphragme adjacents, et pour pouvoir être éloignés les uns des autres pour une position ouverte dans laquelle des ensembles de plaque filtrante à diaphragme adjacents sont espacés les uns des autres;
un média filtrant disposé entre des ensembles de plaque filtrante à diaphragme adjacents;
un agencement de translation pour rapprocher les ensembles de plaque filtrante à diaphragme les uns des autres afin de former une chambre filtrante entre des plaques filtrantes adjacentes, et pour les éloigner les uns des autres afin d'ouvrir la chambre filtrante;
un agencement d'alimentation pour introduire une suspension dans la chambre filtrante;
un agencement de récupération pour récupérer le filtrat sortant de la chambre filtrante, et
un agencement d'évacuation pour évacuer un gâteau de filtre formé à l'intérieur de la chambre filtrante.
